# EUROPÄISCHE PATENTSCHRIFT

(11) **EP 2 616 870 B1**
(45) Veröffentlichungstag und Bekanntmachung des Hinweises auf die Patenterteilung: **08.11.2017**
(21) Anmeldenummer: 11758461.5
(22) Anmeldetag: 16.09.2011
(51) Int. Cl.: G02B 27/01, B60R 11/00, B60R 11/02

(54) **ANZEIGEEINHEIT MIT EINEM PROJEKTIONSSCHIRM FÜR EIN HEAD-UP-DISPLAY**
DISPLAY UNIT COMPRISING A PROJECTION SCREEN FOR A HEAD-UP DISPLAY
UNITÉ D'AFFICHAGE COMPRENANT UN ÉCRAN DE PROJECTION POUR AFFICHAGE TÊTE HAUTE

(30) Priorität: 18.09.2010 DE 102010046007
(43) Veröffentlichungstag der Anmeldung: 24.07.2013
(73) Patentinhaber: Johnson Controls GmbH, 51399 Burscheid (DE)
(72) Erfinder: HOPF, Christian, 35578 Wetzlar (DE); NOEL, Alexander, 35410 Hungen-Nonnenroth (DE); RUMPF, Horst, 35745 Herborn (DE)
(74) Vertreter: Finger, Catrin
(86) Internationale Anmeldenummer: PCT/EP2011/066065
(87) Internationale Veröffentlichungsnummer: WO 2012/035128

(56) Entgegenhaltungen:
- EP-A1- 2 133 594
- DE-A1-102008 054 376
- DE-C1- 19 714 237
- US-A- 3 802 764
- US-A- 5 394 203
- US-A- 5 734 357
- US-A1- 2005 156 815

## Beschreibung

Die Erfindung betrifft eine Anzeigeeinheit mit einem Projektionsschirm für ein Head-up-Display nach den Merkmalen des Oberbegriffs des Anspruchs 1.

Derartige Head-up-Displays sind allgemein aus dem Stand der Technik bekannt und umfassen eine Anzeigeeinheit mit einem Projektionsschirm, auf welchen mittels einer bildgebenden Einheit und gegebenenfalls mittels eines Optikmoduls Fahrzeuginformationen projiziert werden. Der Projektionsbildschirm ist dabei transparent ausgebildet und im Sichtfeld des Fahrzeugführers angeordnet.

Um eine optimierte Anzeige für den Fahrzeugführer zu schaffen, welche sich insbesondere durch eine geometrisch sauber entzerrte Darstellung der Informationen auszeichnet, ist es erforderlich, insbesondere in Abhängigkeit von einer Größe und daraus folgenden Sitzposition des Fahrzeugführers eine Neigung des Projektionsschirms um eine horizontal verlaufende Neigungsachse einzustellen. Hierbei ist eine sehr feine Einstellung erforderlich. Gleichzeitig ist eine sichere Fixierung des Projektionsschirms in der eingestellten Position erforderlich, um eine Änderung der Position während des Betriebs des Head-up-Displays zu vermeiden.

Weitere Head-up-Displays sind aus der US 2005/156815 A1, US 5 394 203 A, US 5 734 357 A sowie US 3 802 764 A bekannt.

Antriebsanordnungen mit Schneckengetrieben zeigen die EP 2 133 594 A1, die DE 197 14 237 C1 und die DE 10 2008 054 376 A1.

Der Erfindung liegt die Aufgabe zugrunde, eine verbesserte Anzeigeeinheit mit einem Projektionsschirm für ein Head-up-Display anzugeben.

Hinsichtlich der Anzeigeeinheit wird die Aufgabe erfindungsgemäß durch eine Anzeigeeinheit mit einem Projektionsschirm für ein Head-up-Display mit den Merkmalen des Anspruchs 1 gelöst.

Bevorzugte Ausgestaltungen und Weiterbildungen der Erfindung sind in den abhängigen Ansprüchen angegeben.

Bei der Anzeigeeinheit mit einem Projektionsschirm für ein Head-up-Display ist der Projektionsschirm um eine Neigungsachse schwenkbar in einem Trägerelement gelagert und angeordnet und mittels einer Schwenkvorrichtung neigungsverstellbar, wobei die Schwenkvorrichtung aus einem zweistufigen Schneckengetriebe gebildet ist. Dadurch ist eine sehr feine und exakte Einstellung der Neigung des Projektionsschirms durchführbar, wobei gleichzeitig eine sichere Fixierung des Projektionsschirms während des Betriebs des Head-up-Displays und während des Betriebs des Fahrzeugs realisiert ist.

Das Schneckengetriebe ermöglicht einerseits eine sehr fein aufgelöste, stufenlose und exakte Einstellung der Neigung des Projektionsschirms bei exakter Reproduzierbarkeit. Andererseits ergibt sich aus der Verwendung des Schneckengetriebes, dass der Projektionsschirm aufgrund der Verzahnung der Schneckenrades mit einem Zahnrad und einer Kopplung des Schneckenrades mit einer Antriebseinheit aufgrund der Selbsthemmung des Schneckengetriebes und einem daraus resultierendem mechanischen Widerstand der Antriebseinheit in seiner eingestellten Position sicher fixiert ist. Weiterhin ist es aufgrund der Verwendung des Schneckengetriebes und der daraus resultierenden hohen Untersetzung möglich, zur Einstellung eine Antriebseinheit mit einer geringen Leistung zu verwenden. Somit ist es möglich, den Bauraumbedarf für die Anzeigeeinheit und die erforderliche elektrische Energiemenge zur Einstellung der Neigung des Projektionsschirms zu verringern. Das zweistufige Schneckengetriebe ermöglicht bedingt durch seine große Untersetzung eine besonders feine und exakte Einstellung der Neigung des Projektionsschirms.

Eine erste Schnecke ist form-, stoff- und/oder kraftschlüssig mit einer Ausgangswelle einer Antriebseinheit gekoppelt und rotiert um eine erste Rotationsachse. Dabei ist eine Antriebseinheit bevorzugt als herkömmlicher Schrittmotor ausgebildet.

Die erste Schnecke steht in Wirkverbindung mit einer zweiten Schnecke, welche um eine zweite Rotationsachse rotiert, die im Trägerelement drehbar gelagert ist.

Erfindungsgemäß ist die Schwenkvorrichtung federnd gelagert und mittels zumindest eines Federelements an dem Trägerelement befestigt. Dadurch sind Schwingungen, Vibrationen und/oder Beschleunigungen der Antriebseinheit, der Schneckenräder und/oder des Übertragungselements und daraus resultierende Reibungen und/oder Verschleiß an der Antriebseinheit, den Schnecken und/oder dem Übertragungselement vermieden oder zumindest verringert. Dabei ist mittels des Federelements eine Ausgleichsbewegung der zweiten Schnecke in Längsrichtung der Rotationsachse ausgleich- und dämpfbar. Um dies auf einfache Weise zu ermöglichen, umgreift das Federelement die Antriebseinheit oder das Trägerelement zumindest abschnittsweise klammerartig, wobei es jeweils endseitig auf die Rotationsachse einwirkt und eine Vorspannung erzeugt.

In einer bevorzugten Ausführungsvariante weist die zweite Schnecke einen ersten Bereich und einen zweiten Bereich auf, wobei der erste Bereich als Zahnrad, insbesondere als schrägverzahntes Schneckenrad, ausgebildet ist, dessen Verzahnung korrespondierend zur ersten Schnecke ausgebildet ist und der zweite Bereich schneckenradartige Schraubengänge aufweist. Dadurch sind mittels eines einstückigen Bauteils zwei Funktionen realisierbar, so dass eine Bauelementeanzahl der Anzeigeeinheit reduziert ist.

Zur Ermöglichung eines reibungsarmen Betriebs verlaufen die Rotationsachsen der beiden Schneckenräder bevorzugterweise im Wesentlichen rechtwinklig zueinander.

In einer besonders bevorzugten Ausführungsvariante ist an einem unteren Ende des Projektionsschirms oder einer Halterung des Projektionsschirms ein Übertragungselement angeordnet, wobei das Übertragungselement an einer dem zweiten Bereich der zweiten Schnecke zugewandten Seite kreisbogenabschnittsförmig ausgebildet ist.

Besonders bevorzugt ist in das kreisbogenabschnittsförmige Übertragungselement eine Verzahnung eingebracht, welche korrespondierend zur zweiten Schnecke ausgebildet ist, so dass das Übertragungselement derart in Wirkverbindung mit der zweiten Schnecke steht, dass eine Drehbewegung der zweiten Schnecke um die Rotationsachse zu einer Schwenkbewegung des Projektionsschirms um die Neigungsachse führt. Somit ist eine bauteilreduzierte und einfache Kinematik zur Schwenkung des Projektionsschirms ermöglicht.

Ausführungsbeispiele der Erfindung werden im Folgenden anhand von Zeichnungen näher erläutert.

Dabei zeigen:
- Figur 1: schematisch einen Ausschnitt einer Anzeigeeinheit für ein Head-up-Display in einer perspektivischen Ansicht,
- Figur 2: schematisch eine stark vereinfachte Schnittdarstellung eines Projektionsschirms und einer Schwenkvorrichtung der Anzeigeeinheit gemäß Figur 1,
- Figur 3: schematisch eine erste perspektivische Ansicht der Schwenkvorrichtung gemäß Figur 2,
- Figur 4: schematisch eine zweite perspektivische Ansicht der Schwenkvorrichtung gemäß Figur 2,
- Figur 5: schematisch eine dritte perspektivische Ansicht der Schwenkvorrichtung gemäß Figur 2, und
- Figur 6: schematisch eine vierte perspektivische Ansicht der Schwenkvorrichtung gemäß Figur 2.

Einander entsprechende Teile sind in allen Figuren mit den gleichen Bezugszeichen versehen.

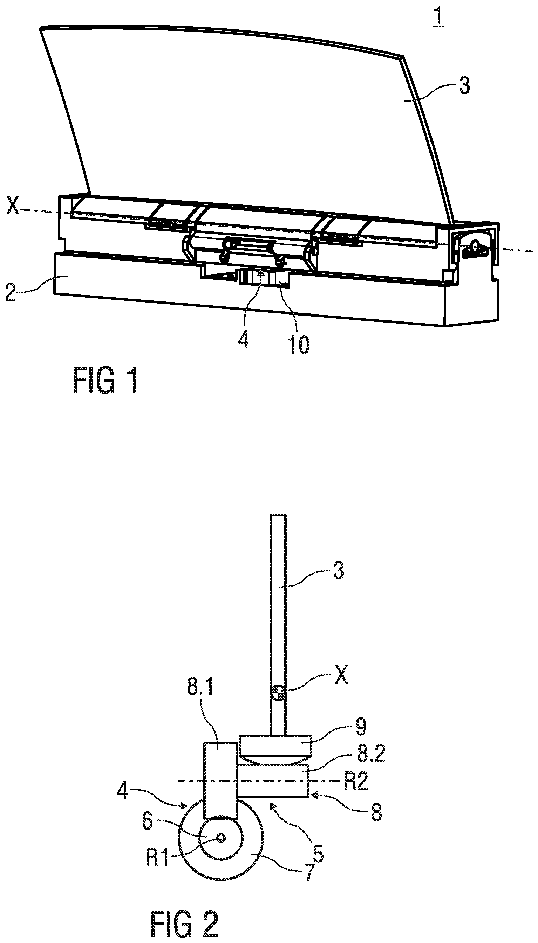

In Figur 1 ist ein Ausschnitt einer Anzeigeeinheit 1 für ein Head-up-Display in einer perspektivischen Ansicht dargestellt. Die Anzeigeeinheit 1 umfasst ein Trägerelement 2, in welchem ein Projektionsschirm 3 um eine horizontal verlaufende Neigungsachse X schwenkbar gelagert und angeordnet ist.

Das Trägerelement 2 ist vorzugsweise in nicht näher dargestellter Weise in oder auf einer Armaturentafel eines Fahrzeugs befestigt. Der Projektionsschirm 3 ist dabei derart ausgebildet, dass dieser sich ständig oberhalb der Armaturentafel in einem Sichtbereich des Fahrzeugführers befindet. Alternativ ist der Projektionsschirm 3 in nicht näher dargestellter Weise vollständig verfahrbar, d. h. insbesondere in einen Hohlraum innerhalb der Armaturentafel unterhalb von deren Oberfläche einfahrbar und bei gewünschter Benutzung aus diesem Hohlraum ausfahrbar.

Zum Schwenken des Projektionsschirms 3 um die Neigungsachse X ist eine Schwenkvorrichtung 4 vorgesehen.

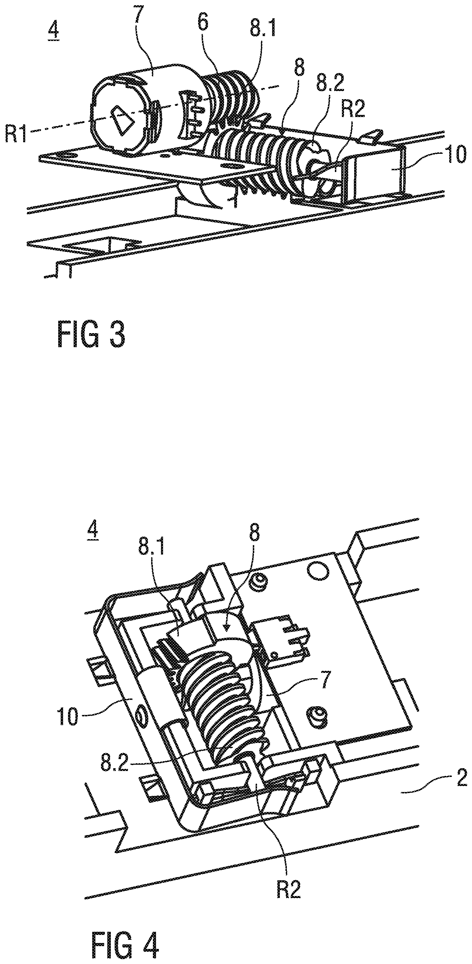

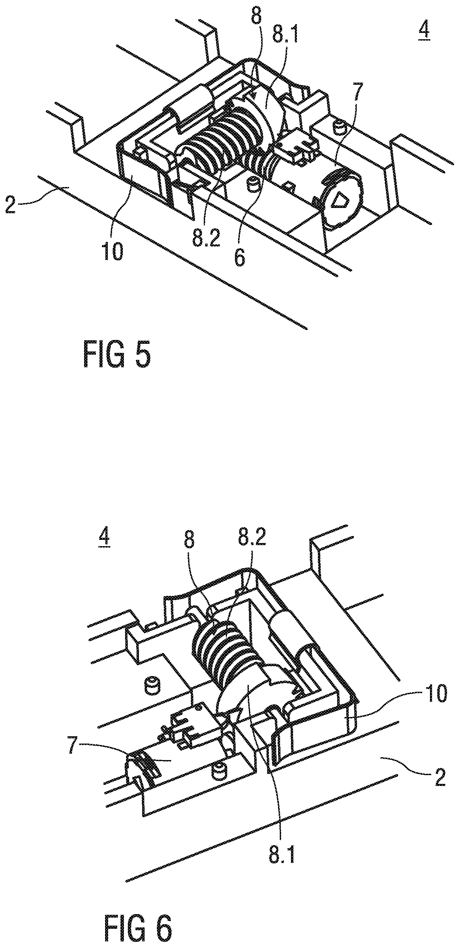

Figur 2 zeigt eine stark vereinfachte Schnittdarstellung des Projektionsschirms 3 und der Schwenkvorrichtung 4. Die Figuren 3 bis 6 zeigen die Schwenkvorrichtung 4 in verschiedenen Ansichten.

Die Schwenkvorrichtung 4 umfasst ein Schneckengetriebe 5, welches aus einer ersten Schnecke 6 gebildet ist. Die erste Schnecke 6 ist mit einer Antriebseinheit 7 gekoppelt. Die Antriebseinheit 7 ist insbesondere als Elektromotor, vorzugsweise als Schrittmotor ausgebildet, wobei die erste Schnecke 6 form-, stoff- und/oder kraftschlüssig in nicht näher dargestellter Weise mit einer Ausgangswelle der Antriebseinheit 7 gekoppelt ist.

Die erste Schnecke 6 steht in Wirkverbindung mit einer zweiten Schnecke 8, welche mit ihrer Rotationsachse R2 in dem Trägerelement 2 gelagert ist. Die Rotationsachsen R1, R2 der beiden Schnecken 6, 8 verlaufen dabei im Wesentlichen rechtwinklig zueinander.

Zur Erzeugung der Wirkverbindung zwischen der ersten und der zweiten Schnecke 6, 8 weist die zweite Schnecke 8 einen ersten Bereich 8.1 auf, welcher eine Verzahnung aufweist und derart ein Zahnrad, insbesondere ein schrägverzahntes Schneckenrad ausbildet, das in die Schraubengänge der ersten Schnecke 6 eingreift und mit dieser kämmt.

Durch Einleitung einer Drehbewegung um die Rotationsachse R1 mittels der Antriebseinheit 7 in die erste Schnecke 6 wird somit eine Drehbewegung der zweiten Schnecke 8 um die Rotationsachse R2 erzeugt.

Um die Schwenkbewegung des Projektionsschirms 3 um die Neigungsachse X zu erzeugen, weist die zweite Schnecke 8 einen zweiten Bereich 8.2 auf. In diesen zweiten Bereich 8.2 sind Schraubengänge, insbesondere schneckenradartige Schraubengänge, eingebracht, welche in Wirkverbindung mit einem am unteren Ende des Projektionsschirms 3 angeordneten Übertragungselement 9 stehen. Dieses Übertragungselement 9 ist an einer dem zweiten Bereich 8.2 des zweiten Schneckenrades 8 zugewandten Seite kreisbogenabschnittsförmig ausgebildet, wobei in das Übertragungselement 9 eine Verzahnung eingebracht ist, welche korrespondierend zum zweiten Bereich 8.2 des zweiten Schneckenrads 8 ausgebildet ist. Die Verzahnung ist dabei derart angeordnet, dass die Drehbewegung des zweiten Schneckenrades 8 um die Rotationsachse R2 zu einer Schwenkbewegung des Projektionsschirms 3 um die Neigungsachse X führt.

Um Schwingungen, Vibrationen und/oder Beschleunigungen der Antriebseinheit 7, der Schnecken 6, 8 und/oder des Übertragungselements 9 und daraus resultierende Reibungen und Verschleiß an der Antriebseinheit 7, den Schnecken 6, 8 und/oder dem Übertragungselement 9 zu vermeiden, ist die Schwenkvorrichtung 4 federnd gelagert an dem Trägerelement 2 befestigt.

Hierzu ist zumindest ein Federelement 10 vorgesehen, welches an dem Trägerelement 2 stoff-, kraft- und/oder formschlüssig befestigt ist. Das Federelement 10 ist dabei derart ausgebildet, dass dieses eine Ausgleichsbewegung der zweiten Schnecke 8 in Längsrichtung der Rotationsachse R2 zulässt. Beispielsweise umgreift das Federelement 10 die Antriebseinheit 7 oder das Trägerelement 2 zumindest abschnittsweise klammerartig und wirkt dabei jeweils endseitig auf die Rotationsachse R2 ein.

Bei der nicht dargestellten Ausführung der Anzeigeeinheit 1, bei welcher der Projektionsschirm 3 vollständig in dem Hohlraum innerhalb der Armaturentafel versenkbar ist, ist die Schwenkvorrichtung 4 vorzugsweise zur Ausführung der Bewegung des Ein- und/oder Ausfahrens des Projektionsschirm 3 ausgebildet und vorgesehen.

### Bezugszeichenliste

- 1: Anzeigeeinheit
- 2: Trägerelement
- 3: Projektionsschirm
- 4: Schwenkvorrichtung
- 5: Schneckengetriebe
- 6: erste Schnecke
- 7: Antriebseinheit
- 8: zweite Schnecke
- 8.1: erster Bereich
- 8.2: zweiter Bereich
- 9: Übertragungselement
- 10: Federelement

- R1: Rotationsachse
- R2: Rotationsachse
- X: Neigungsachse

## Patentansprüche

1. Anzeigeeinheit (1) mit einem Projektionsschirm (3) für ein Head-up-Display, einer Schwenkvorrichtung (4), einem Trägerelement (2), einem Federelement (10) und einer Antriebseinheit (7), wobei der Projektionsschirm (3) um eine Neigungsachse (X) schwenkbar in dem Trägerelement (2) gelagert und angeordnet und mittels der Schwenkvorrichtung (4) neigungsverstellbar ist, wobei die Schwenkvorrichtung (4) aus einem zweistufigen Schneckengetriebe gebildet ist, das eine erste Schnecke (6) und eine zweite Schnecke (8) umfasst, wobei die erste Schnecke (6) form-, stoff- und/oder kraftschlüssig mit einer Ausgangswelle der
Antriebseinheit (7) gekoppelt ist und um eine erste Rotationsachse (R1) rotiert, wobei das Schneckengetriebe eine zweite Rotationsachse (R2) umfasst und wobei die erste Schnecke (6) in Wirkverbindung mit der zweiten Schnecke (8) steht, wobei die zweite Schnecke (8) um die zweite Rotationsachse (R2) rotiert, welche in dem Trägerelement (2) drehbar gelagert ist,
**dadurch gekennzeichnet, dass** die Schwenkvorrichtung (4) federnd gelagert mittels zumindest des Federelements (10) an dem Trägerelement (2) befestigt ist, wobei mittels des Federelements (10) eine Ausgleichsbewegung der zweiten Schnecke (8) in Längsrichtung der zweiten Rotationsachse (R2) ausgleich- und dämpfbar ist und das Federelement (10) die Antriebseinheit (7) oder das Trägerelement (2) zumindest abschnittsweise klammerartig umgreift und jeweils endseitig auf die zweite Rotationsachse (R2) einwirkt.

2. Anzeigeeinheit (1) nach Anspruch 1,
**dadurch gekennzeichnet, dass** die zweite Schnecke (8) einen ersten Bereich (8.1) und einen zweiten Bereich (8.2) aufweist, wobei der erste Bereich (8.1) als Zahnrad ausgebildet ist, dessen Verzahnung korrespondierend zur ersten Schnecke (6) ausgebildet ist und der zweite Bereich (8.2) schneckenradartige Schraubengänge aufweist.

3. Anzeigeeinheit (1) nach einem der vorherigen Ansprüche,
**dadurch gekennzeichnet, dass** die erste Rotationsachse (R1) und die zweite Rotationsachse (R2) im Wesentlichen rechtwinklig zueinander verlaufen.

4. Anzeigeeinheit (1) nach einem der vorherigen Ansprüche,
**dadurch gekennzeichnet, dass** die Anzeigeeinheit (1) ein Übertragungselement (9) umfasst, und an einem unteren Ende des Projektionsschirms (3) das Übertragungselement (9) angeordnet ist, oder die Anzeigeeinheit (1) ein Übertragungselement (9) und eine Halterung des Projektionsschirms (3) umfasst, und dass an der Halterung des Projektionsschirms (3) das Übertragungselement (9) angeordnet ist.

5. Anzeigeeinheit (1) nach Anspruch 4,
**dadurch gekennzeichnet, dass** das Übertragungselement (9) an einer dem zweiten Bereich (8.2) der zweiten Schnecke (8) zugewandten Seite kreisbogenabschnittsförmig ausgebildet ist.

6. Anzeigeeinheit (1) nach Anspruch 5,
**dadurch gekennzeichnet, dass** in das kreisbogenabschnittsförmige Übertragungselement (9) eine Verzahnung eingebracht ist, welche korrespondierend zur zweiten Schnecke (8) ausgebildet ist.

7. Anzeigeeinheit (1) nach einem der Ansprüche 4 bis 6,
**dadurch gekennzeichnet, dass** das Übertragungselement (9) derart in Wirkverbindung mit der zweiten Schnecke (8) steht, dass eine Drehbewegung der zweiten Schnecke (8) um die zweite Rotationsachse (R2)
zu einer Schwenkbewegung des Projektionsschirms (3) um die Neigungsachse (X) führt.

## Claims

1. A display unit (1) comprising a projection screen (3) for a head-up display, a pivoting device (4), a carrier element (2), a spring element (10) and a drive unit (7)wherein the projection screen (3) is mounted and arranged in the carrier element (2) pivotably about an axis of inclination (X) and can be adjusted in its inclination by means of the pivoting device (4), the pivoting device (4) comprising at least one two-stage worm gear comprising a first worm (6) and a second worm (8), wherein the first worm (6) is coupled positively, materially integrally and/or nonpositively to an output shaft of a drive unit (7) and rotates about a first axis of rotation (R1), wherein the worm gear comprises a second axis of rotation (R2) and wherein the first worm (6) is connected operatively to the second worm (8), wherein the second worm (8) rotates about the second axis of rotation (R2) which is mounted rotatably in the carrier element (2), **characterized in that** the pivoting device (4) is fastened, mounted resiliently by means of at least the spring element (10), to the carrier element (2), wherein a compensating movement of the second worm (8) in the longitudinal direction of the second axis of rotation (R2) can be compensated and damped by means of the spring element (10) and the spring element (10) surrounds the drive unit (7) or carrier element (2) at least partially in a clasp-like manner and acts upon the second axis of rotation (R2) in each case on the end faces.

2. The display unit (1) as claimed in claim 1, **characterized in that** the second worm (8) has a first region (8.1) and a second region (8.2), the first region (8.1) being designed as a gearwheel, the toothing of which is designed to match with the first worm, and the second region (8.2) having worm wheel-like flights.

3. The display unit (1) as claimed in one of the preceding claims, **characterized in that** the first axis of rotation (R1) and the second axis of rotation (R2) run essentially at right angles to one another.

4. The display unit (1) as claimed in one of the preceding claims, **characterized in that** the display unit (1) comprises a transmission element (9), and the transmission element (9) is arranged at a lower end of the projection screen (3) or that the display unit (1) comprises a transmission element (9) and a mount of the projection screen (3), and that the transmission element (9) is arranged on the mount of the projection screen (3).

5. The display unit (1) as claimed in claim 4, **characterized in that** the transmission element (9) is designed in the form of a segment of an arc of a circle on a side facing the second region (8.2) of the second worm (8).

6. The display unit (1) as claimed in claim 5, **characterized in that** a toothing is introduced into the transmission element (9) in the form of a segment of an arc of a circle and is designed to match with the second worm (8).

7. The display unit (1) as claimed in one of the claims 4 to 6, **characterized in that** the transmission element (9) is connected operatively to the second worm (8) in such a way that a rotational movement of the second worm (8) about the second axis of rotation (R2) leads to a pivoting movement of the projection screen (3) about the axis of inclination (X).

## Revendications

1. Unité d'affichage (1) présentant un écran de projection (3) pour affichage tête haute, un ensemble de pivotement (4), un élément de support (2), un élément élastique (10) et une unité d'entraînement (7),
l'écran de projection (3) étant monté et disposé de manière à pouvoir pivoter dans l'élément de support (2) autour d'un axe d'inclinaison (X) et son inclinaison pouvant être ajustée au moyen de l'ensemble de pivotement (4),
l'ensemble de pivotement (4) étant formé d'une transmission à vis à deux étages qui comporte une première vis (6) et une deuxième vis (8),
la première vis (6) étant accouplée en correspondance géométrique, mécanique ou de matière à un arbre de sortie de l'unité d'entraînement (7) et tournant autour d'un premier axe de rotation (R1),
la transmission à vis comportant un deuxième axe de rotation (R2) et la première vis (6) coopérant avec la deuxième vis (8),
la deuxième vis (8) tournant autour du deuxième axe de rotation (R2) monté à rotation dans l'élément de support (2),
**caractérisée en ce que**
l'ensemble de pivotement (4) est fixé sur l'élément de support (2) en étant monté élastiquement au moyen d'au moins l'élément élastique (10),
**en ce qu'**un déplacement de compensation de la deuxième vis (8) dans le sens de la longueur du deuxième axe de rotation (R2) peut être exécuté et amorti au moyen de l'élément élastique (10) et
**en ce que** l'élément élastique (10) chevauche à la manière d'une pince au moins certaines parties de l'unité d'entraînement (7) ou de l'élément de support (2) et agit par ses extrémités sur le deuxième axe de rotation (R2).

2. Unité d'affichage (1) selon la revendication 1, **caractérisée en ce que** la deuxième vis (8) présente une première partie (8.1) et une deuxième partie (8.2), la première partie (8.1) étant configurée comme roue dentée dont la denture correspond à la première vis (6) et la deuxième partie (8.2) présentant des pas de vis de type pour roue dentée.

3. Unité d'affichage (1) selon l'une des revendications précédentes, **caractérisée en ce que** le premier axe de rotation (R1) et le deuxième axe de rotation (R2) s'étendent essentiellement à la perpendiculaire l'un de l'autre.

4. Unité d'affichage (1) selon l'une des revendications précédentes, **caractérisée en ce que** l'unité d'affichage (1) comprend un élément de transfert (9) et **en ce que** l'élément de transfert (9) est disposé à une extrémité inférieure de l'écran de projection (3) ou **en ce que** l'unité d'affichage (1) comporte un élément de transfert (9) et un support de l'écran de projection (3) et **en ce que** l'élément de transfert (9) est disposé sur le support de l'écran de projection (3).

5. Unité d'affichage (1) selon la revendication 4, **caractérisée en ce que** l'élément de transfert (9) est configuré en forme de segment d'arc de cercle sur un côté tourné vers la deuxième partie (8.2) de la deuxième vis (8).

6. Unité d'affichage (1) selon la revendication 5, **caractérisée en ce qu'**une denture qui correspond à la deuxième vis (8) est ménagée dans l'élément de transfert (9) en forme de segment d'arc de cercle.

7. Unité d'affichage (1) selon l'une des revendications 4 à 6, **caractérisée en ce que** l'élément de transfert (9) coopère avec la deuxième vis (8) de telle sorte qu'un déplacement de rotation de la deuxième vis (8) autour du deuxième axe de rotation (R2) entraîne un déplacement de pivotement de l'écran de projection (3) autour de l'axe d'inclinaison (X).
